# EUROPÄISCHE PATENTSCHRIFT

(11) **EP 3 294 616 B1**
(45) Veröffentlichungstag und Bekanntmachung des Hinweises auf die Patenterteilung: **10.07.2019**
(21) Anmeldenummer: 15733671.0
(22) Anmeldetag: 24.06.2015
(51) Int. Cl.: B62K 19/30, B62M 6/55

(54) **FAHRRADRAHMEN MIT EINER AUFNAHMEVORRICHTUNG FÜR EIN ANTRIEBSGEHÄUSE**
BICYCLE FRAME COMPRISING A RECEIVING DEVICE FOR A DRIVE HOUSING
CADRE DE BICYCLETTE MUNI D'UN DISPOSITIF DE LOGEMENT D'UN BOÎTIER D'ENTRAÎNEMENT

(43) Veröffentlichungstag der Anmeldung: 21.03.2018
(73) Patentinhaber: Muff, André Armando, 8006 Zürich (CH)
(72) Erfinder: Muff, André Armando, 8006 Zürich (CH)
(74) Vertreter: Kohlmann, Kai
(86) Internationale Anmeldenummer: PCT/EP2015/064216
(87) Internationale Veröffentlichungsnummer: WO 2016/206731

(56) Entgegenhaltungen:
- WO-A1-2015/015014
- AT-U1- 12 217
- DE-A1-102013 224 668
- GB-A- 2 249 529

## Beschreibung

Die Erfindung betrifft einen Fahrradrahmen umfassend
- eine rahmenfest an der Unterseite des Fahrradrahmens angeordnete Aufnahmevorrichtung,
- ein lösbar mit der Aufnahmevorrichtung verbundenes Antriebsgehäuse geeignet zur Einhausung eines Getriebes und/oder mindestens einer elektrischen Antriebskomponente,
- eine erste mechanische Schnittstelle, die an der Aufnahmevorrichtung angeordnet ist und
- eine zweite mechanische Schnittstelle, die an dem Antriebsgehäuse angeordnet ist.

Elektrofahrräder mit einem Mittelmotor-Antrieb weisen regelmäßig an der Verbindungsstelle zwischen Hauptrahmen und Hinterbau an ihrer Unterseite eine Aufnahmevorrichtung für ein Antriebsgehäuse auf. Bei den Elektrofahrrädern ist zwischen einem Pedelec und einem E-Bike zu unterscheiden. Bei einem Pedelec erhält der Fahrer von einem Elektroantrieb eine Tretunterstützung. Bei einem E-Bike treibt der Motor das Fahrrad auch ohne Tretunterstützung an. Das Antriebsgehäuse eines Elektrofahrrades umfasst daher regelmäßig einen Elektromotor, ein Getriebe sowie ggf. eine Tretlagerwelle zur Aufnahme der Tretkurbeln.

Ferner sind in jüngerer Zeit komplexe Getriebe für muskelkraftbetriebene Antriebe bekannt geworden, die ebenfalls in einem Antriebsgehäuse eingehaust und ebenfalls an der Unterseite des Rahmens lösbar mit einer Aufnahmevorrichtung verbunden sind.

Die Aufnahmevorrichtung ist in den Fahrradrahmen integriert, durch Schweißen bei Alu-, Titan oder Stahlrahmen oder durch Integration in die Konstruktion bei Kunstfaserrahmen aus Karbon, Kevlar oder dergleichen. Außerdem ist die Aufnahmevorrichtung an das lösbar mit ihr verbundene Antriebsgehäuse angepasst. Die Aufnahmevorrichtung ist vielfach als massives, gewölbtes Bauteil ausgebildet an dem das Unterrohr, das Sattelrohr sowie die untere Strebe des Hinterbaus zusammenlaufen. Die Wölbung des Bauteils folgt der Kontur des Antriebsgehäuses. Mit Hilfe übereinstimmender mechanischer Schnittstellen lässt sich das Antriebsgehäuse lösbar an der speziell an das Antriebsgehäuse angepassten Aufnahmevorrichtung mit Hilfe von Schraubverbindungen befestigen.

Trotz der unbestrittenen Vorteile des Mittelmotor-Konzeptes für Elektrofahrräder, insbesondere die kompakte Bauweise sowie die günstige Gewichtsverteilung besteht ein wesentlicher Nachteil in dem deutlich höheren Preis des speziell an das Antriebsgehäuse der Motor-Getriebeeinheit angepassten Fahrradrahmens. Der Fahrradhersteller muss für unterschiedliche Antriebsgehäusetypen jeweils einen eigenen Fahrradrahmen mit angepasster Aufnahmevorrichtung vorhalten. Der Austausch des verbauten Antriebs gegen einen Antrieb eines anderen Herstellers ist aufgrund der zumeist abweichenden mechanischen Schnittstellen des Antriebsgehäuses regelmäßig nicht möglich. Auch die Hersteller von Fahrradrahmen können aufgrund des sich rasch ändernden Marktes kaum zuverlässig einschätzen, welche Antriebsgehäuse mit den darin verbauten Komponenten in naher Zukunft von den Fahrradherstellern beziehungsweise Kunden stärken nachgefragt werden. Infolgedessen ist eine Vorausplanung der Herstellung von Fahrradrahmen mit integrierten Aufnahmevorrichtungen für ein Antriebsgehäuse problematisch.

Die WO 2015/015014 A1 offenbart ein Montagesystem, dass die Montage und Demontage eines elektrischen Antriebssystems an einem Fahrrad vereinfacht. Durch das Montagesystem soll das Fahrrad mit wenigen Handgriffen als normales Fahrrad und als E-Bike nutzbar sein. An einem Unterrohr des Fahrradrahmens sind zu diesem Zweck zwei horizontal verlaufende Durchgänge zur Aufnahme von Schnellspannachsen angeordnet, mit deren Hilfe zwei Adapterteile an dem Rahmen lösbar befestigt sind. Das erste Adapterteil wird auf den Motorschrauben mittels Schraubhülsen befestigt. Das zweite Adapterteil wird mittels Schrauben an dem Kühlrippengehäuse verschraubt.

Die AT 12 217 U1 offenbart einen Adapter, der den nachträglichen Anbau eines Elektromotors an Fahrrädern ermöglicht. Zur Befestigung des Adapters wird eine Aufnahmescheibe an beiden Seiten des Tretlagers angebracht. Als dritter Anbindungspunkt wird der Adapter mittels einer Schelle an dem Unterrohr des Rahmens befestigt. An dem derart befestigten Adapter wird sodann eine Motorhalterung zur Aufnahme des Motors montiert.

Die DE 10 2013 224 668 A1, welche die Präambel von Anspruch 1 offenbart, offenbart ein umrüstbares Fahrrad, an dem wahlweise eine Antriebseinheit oder eine Tretlagereinheit Verwendung finden kann. Durch den vorgesehenen Austausch soll eine Montage, Funktionsprüfung und Instandsetzung eines Elektrofahrrades einerseits vereinfacht und andererseits der Nachteil des höheren Gewichts von Elektrofahrrädern bei nicht zugeschaltetem Antrieb, das heißt bei Tretlagerbetrieb, vermindert werden. Die austauschbare Antriebseinheit lässt sich nur als gesamte Einheit montieren. Um die Antriebseinheit lösbar an dem Fahrradrahmen zu befestigen, weist das Gehäuse der Antriebseinheit eine Adaptervorrichtung auf, welche mit einer korrespondierenden, fest mit dem Rahmen verbundenen Adaptervorrichtung lösbar verbindbar ist.

Ausgehend von diesem Stand der Technik liegt der Erfindung die Aufgabe zugrunde, einen Fahrradrahmen zu schaffen, der mit geringen zusätzliche Kosten und geringem zusätzlichen Herstellungsaufwand mit einer Vielzahl unterschiedlicher Antriebsgehäuse verbindbar ist, wobei Stabilitätseinbußen durch den zwischengeschalteten Adapter verhindert werden sollen.

Diese Aufgabe wird bei einem Fahrradrahmen der eingangs erwähnten Art dadurch gelöst, dass
- die erste und zweite mechanische Schnittstelle unterschiedlich sind,
- zur lösbaren Verbindung des Antriebsgehäuses mit der Aufnahmevorrichtung zwischen dem Antriebsgehäuse und der Aufnahmevorrichtung ein zur Anpassung der unterschiedlichen mechanischen Schnittstellen eingerichteter mechanischer Adapter angeordnet ist,
- sowohl die erste als auch die zweite Schnittstelle eine Kontaktfläche aufweist,
- die erste Schnittstelle mehrere an der Kontaktfläche angeordnete Befestigungsstellen aufweist, wobei an den Befestigungsstellen erste Befestigungsmittel zur lösbaren Verbindung der Aufnahmevorrichtung mit dem Adapter angeordnet sind,
- und die zweite Schnittstelle mehrere an der Kontaktfläche angeordnete Befestigungsstellen aufweist, wobei an den Befestigungsstellen zweite Befestigungsmittel zur lösbaren Verbindung des Antriebsgehäuses mit dem Adapter angeordnet sind.

Die erste Schnittstelle weist mehrere an der Kontaktfläche angeordnete Befestigungsstellen auf, wobei an den Befestigungsstellen erste Befestigungsmittel zur lösbaren Verbindung der Aufnahmevorrichtung mit dem Adapter angeordnet sind. Die zweite Schnittstelle weist ebenfalls mehrere an der Kontaktfläche angeordnete Befestigungsstellen auf, wobei an den Befestigungsstellen zweite Befestigungsmittel zur lösbaren Verbindung des Antriebsgehäuses mit dem Adapter angeordnet sind. Als Befestigungsmittel kommen insbesondere Schraubverbindungen, jedoch auch andere Befestigungsmittel zur lösbaren Verbindung der Aufnahmevorrichtung beziehungsweise des Antriebsgehäuses mit dem Adapter in Betracht. Sofern die Lage der Befestigungsstellen in Bezug auf die jeweiligen Kontaktflächen von Aufnahmevorrichtung und Antriebsgehäuse unterschiedlich ist, werden diese Lageunterschiede ebenfalls durch den Adapter angepasst.

Der gemäß der Erfindung vorgeschlagene Adapter erlaubt es, an ein und demselben Fahrradrahmen unterschiedliche Antriebsgehäuse zu befestigen, wodurch die Lieferfähigkeit der Fahrradrahmen-Hersteller verbessert und die Lagerhaltung der Fahrradhersteller vereinfacht wird. Außerdem kann der Kunde das Antriebsgehäuse und damit den Antrieb zu einem späteren Zeitpunkt unproblematisch tauschen.

Der Adapter ist einteilig, kann jedoch bei komplexeren Geometrien der Aufnahmevorrichtung auch mehrteilig ausgeführt sein.

Sowohl die erste, fahrradrahmenseitige Schnittstelle, als auch die zweite, antriebsgehäuseseitige Schnittstelle, weisen eine Kontaktfläche mit einer bestimmten Formgebung auf. Die Oberfläche des Adapters liegt bündig an den Kontaktflächen sowohl der ersten als auch der zweiten Schnittstelle an. Sofern die Formgebung der Kontaktflächen der ersten und zweiten mechanischen Schnittstelle voneinander abweicht, wird die unterschiedliche Formgebung durch den Adapter ausgeglichen. Die bündige Anlage an den Kontaktflächen verhindert Stabilitätseinbußen durch den zwischengeschalteten Adapter.

Die Befestigungsmittel zur lösbaren Verbindung der Aufnahmevorrichtung beziehungsweise des Antriebsgehäuses mit dem Adapter sind vorzugsweise als Schraubverbindungen ausgestaltet. Jede Schraubverbindung umfasst eine Schraube, die in ein Loch mit Innengewinde oder eine Mutter einschraubbar ist. Das Zurückgreifen auf bewährte Schraubverbindungen hat den Vorteil, dass für die lösbare Befestigung des Antriebsgehäuses keine vom üblichen Befestigungsstandard bei Fahrrädern abweichenden Befestigungsmittel zum Einsatz gelangen. Die unterschiedliche Lage der Befestigungsstellen kann beispielsweise zur Folge haben, dass die Schraubenachsen der ersten Schraubverbindungen senkrecht zu den Schraubenachsen der zweiten Schraubverbindungen verlaufen. Selbstverständlich liegt es jedoch auch im Rahmen der Erfindung, dass die Schraubenachsen der ersten Schraubverbindungen parallel zu den Schraubenachsen der zweiten Schraubverbindungen verlaufen.

Die Aufnahmevorrichtung weist, wie aus dem Stand der Technik bekannt, vorzugsweise einen sich in Längsrichtung des Fahrradrahmens erstreckenden Profilkörper mit einem über die Längserstreckung gleichbleibenden, viereckigen Querschnitt auf. Im einfachsten Fall handelt es sich um einen flachen, rechteckigen Querschnitt, wobei der Profilkörper in Richtung des Sattelrohres nach oben gewölbt ausgeführt ist.

Darüber hinaus kommen für die Profilkörper insbesondere u-förmige, w-förmige oder t-förmige Querschnitte in Frage. An den senkrechten Schenkeln der Aufnahmevorrichtungen mit komplexeren, vieleckigen Querschnitten befinden sich horizontale Durchgänge zur Aufnahme der Schraubverbindungen, die das Antriebsgehäuse lösbar mit dem Adapter verbinden.

Nachfolgend wird die Erfindung anhand der Ausführungsbeispiele näher erläutert. Es zeigen
- **Figur 1**: eine Seitenansicht eines Fahrrades mit einem erfindungsgemäßen Fahrradrahmen,
- **Figur 2**: eine Vorderansicht einer lösbaren Verbindung eines Antriebsgehäuses an einer Aufnahmevorrichtung mit einem einteiligen, im Querschnitt u-förmigen Adapter,
- **Figur 3**: ein zweites Ausführungsbeispiel einer lösbaren Verbindung des Antriebsgehäuses mit der Aufnahmevorrichtung mittels eines zweiteiligen, im Querschnitt jeweils rechteckigen Adapters,
- **Figur 4**: eine Unteransicht auf die Aufnahmevorrichtung und den Adapter nach Figur 2, jedoch ohne Darstellung des Antriebsgehäuses,
- **Figur 5**: eine Draufsicht auf die Aufnahmevorrichtung mit Adapter nach Figur 2, jedoch ohne Darstellung des Antriebsgehäuses sowie
- **Figur 6**: eine Vorderansicht eines dritten Ausführungsbeispiels einer lösbaren Verbindung des Antriebsgehäuses an einer im Querschnitt t-förmigen Aufnahmevorrichtung mittels eines zweiteiligen, im Querschnitt rechteckigen Adapters.

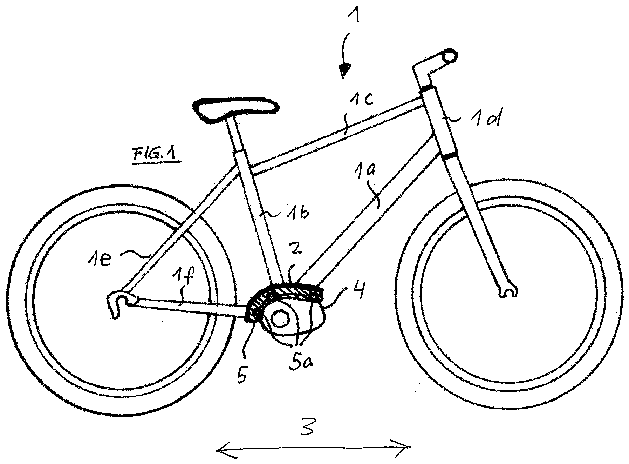

Figur 1 zeigt einen Fahrradrahmen (1), der im Ausführungsbeispiel als Diamantrahmen ausgeführt ist. Der Hauptrahmen umfasst ein Sattelrohr (1b), ein sich vom Sattelrohr (1b) erstreckendes Unter- und Oberrohr (1a,1c) sowie das mit dem Unter- und Oberrohr (1c) verbundene Steuerrohr (1d). Der Hinterbau des Diamantrahmens wird von einer Sitzstrebe (1e) und einer Kettenstrebe (1f) gebildet, die in der Hinterachsaufnahme zusammenlaufen.

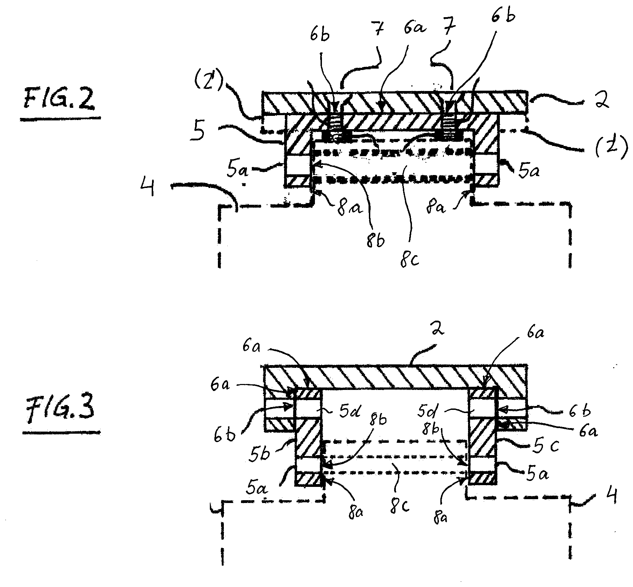

An der Unterseite des Fahrradrahmens (1) ist eine Aufnahmevorrichtung (2) mit der Kettenstrebe (1f), dem Sattelrohr (1b) und dem Unterrohr (1a) stoffschlüssig verbunden. Die Aufnahmevorrichtung (2) ist im Querschnitt in Figur 2 dargestellt und wird von einem Rechteckprofil gebildet, das in Längsrichtung (3) des Fahrradrahmens (1) nach oben in Richtung des Sattels gewölbt ist. An der Aufnahmevorrichtung (2) ist lösbar ein Antriebsgehäuse (4) zur Aufnahme eines Pedelec-Antriebs umfassend ein Getriebe, einen Elektromotor und eine Tretlagerwelle angeordnet. Zur Anpassung der unterschiedlichen mechanischen Schnittstellen (6, 8) von der Aufnahmevorrichtung (2) und dem Antriebsgehäuse (4) ist zwischen der Aufnahmevorrichtung (2) und dem Antriebsgehäuse (4) ein Adapter (5) angeordnet.

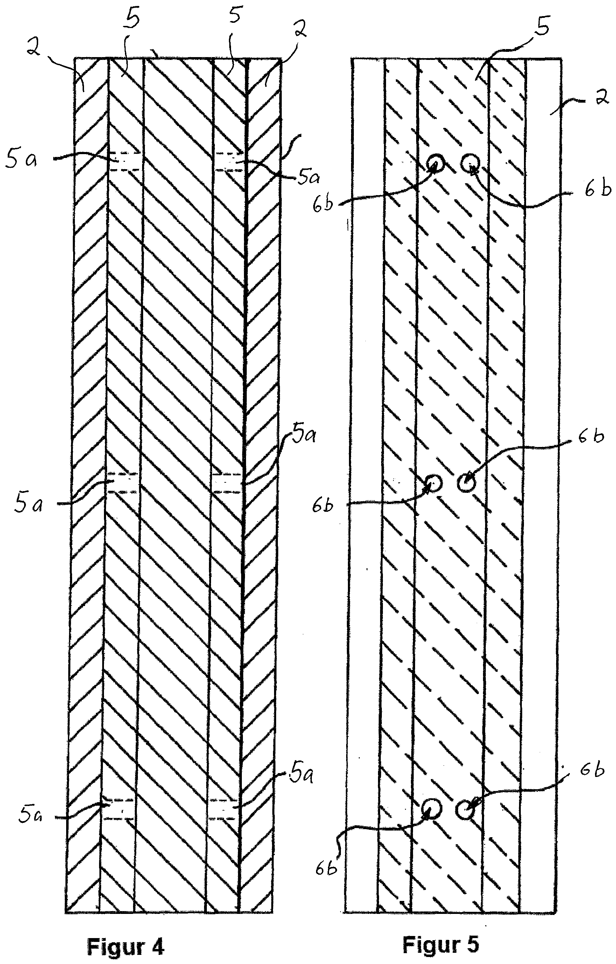

Der Aufbau und die Wirkungsweise des Adapters (5) werden nachfolgend anhand der Figuren 2 bis 6 näher erläutert:
Die Aufnahmevorrichtung (2) weist eine erste Schnittstelle (6) mit einer ebenen Kontaktfläche (6a) und zwei an der Kontaktfläche (6a) angeordneten Befestigungsstellen (6b) in Form von Durchgängen auf, wobei an den beiden Befestigungsstellen (6b) Schraubverbindungen (7) umfassend eine Schraube und eine Mutter zur lösbaren Verbindung der Aufnahmevorrichtung (2) mit dem Adapter (6) angeordnet sind.

Die zweite Schnittstelle (8), die an dem Antriebsgehäuse (4) angeordnet ist, weist mehrere an senkrechten Kontaktfläche (8a) angeordnete Befestigungsstellen (8b) auf, wobei an den Befestigungsstellen (8b) in der Zeichnung nicht dargestellte Schraubverbindungen zur lösbaren Verbindung des Antriebsgehäuses (4) mit dem Adapter (5) angeordnet sind. Die Kontaktflächen (8a) sind Bestandteil eines an der Oberseite des Antriebsgehäuses (4) angeordneten Montageflansches. Zwischen zwei Befestigungsstellen (8b) der Kontaktflächen (8a) erstreckt sich durch den Montageflansch eine Durchgangsbohrung (8c). In den senkrecht nach unten weisenden Schenkeln des Adapters (5) sind mit der Durchgangsbohrung (8c) fluchtende Durchgänge (5a) angeordnet. Die fluchtenden Durchgänge (5a), (8c) durchsetzende Schrauben mit Mutter, stellen die lösbare Verbindung des Antriebsgehäuses (4) mit dem Adapter (5) her.

In Figur 2 ist durch die gestrichelten Linien angedeutet, dass die Aufnahmevorrichtung (2) anstelle eines flachen, rechteckigen Querschnittes auch einen u-förmigen Querschnitt aufweisen kann.

Das Ausführungsbeispiel nach Figur 3 unterscheidet sich von dem Ausführungsbeispiel nach Figur 2 dadurch, dass die Aufnahmevorrichtung (2) im Querschnitt u-förmig und der Adapter (5) zwei Adapterteile (5b, 5c) aufweist. Die Kontaktflächen (6a) der ersten Schnittstelle sind abgewinkelt ausgebildet. Die Befestigungsstellen (6b) zur lösbaren Verbindung der Aufnahmevorrichtung mit dem Adapter befinden sich an den senkrechten Abschnitten der Kontaktflächen (6a) der u-förmig profilierten Aufnahmevorrichtung (2). Die an den Befestigungsstellen (6b) der Kontaktflächen (6a) angeordneten Schraubverbindungen zwischen der Aufnahmevorrichtung (2) und dem zweiteiligen Adapter (5) sind der Übersichtlichkeit halber nicht dargestellt. Die beiden Adapterteile (5b,5c) sind über horizontal angeordnete, nicht dargestellte Schraubverbindungen mit der Aufnahmevorrichtung (2) verbunden. Hierzu weisen sowohl die beiden Adapterteile (5b, 5c) als auch die beiden senkrechten Schenkel der Aufnahmevorrichtung (2) miteinander fluchtende Durchgänge auf. Die Verbindung der beiden Adapterteile (5b, 5c) mit dem Antriebsgehäuse (4) erfolgt über die Durchgänge (5a) in den Adapterteilen (5b, 5c) und die Durchgangsbohrung (8c) in dem Antriebsgehäuse (4) durchsetzende Schraubverbindungen.

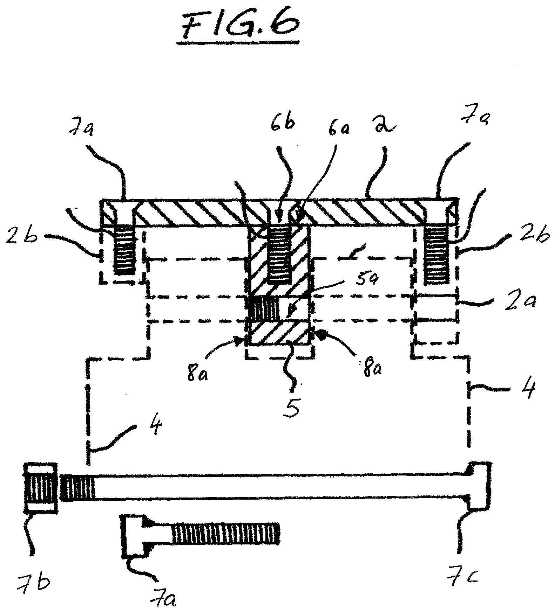

Figur 6 zeigt ein weiteres Ausführungsbeispiel, bei dem die Aufnahmevorrichtung (2) einen flachen, rechteckigen Querschnitt aufweist. Strichpunktiert sind alternativ zwei Ausführungsformen einer Aufnahmevorrichtung (2) mit w-förmigem Querschnitt dargestellt, wobei die äußeren Schenkel (2b) unterschiedlich lang sein können und mit Schrauben (7a) an einer Aufnahmevorrichtung (2) mit flachem, rechteckigen Querschnitt angeschraubt sind. Der Adapter (5) weist ein rechteckigen Querschnitt auf und erstrecht sich in senkrechter Richtung von der Aufnahmevorrichtung (2) nach unten; er ist an Befestigungspunkten (6b) mittels mehrerer Schrauben mit der Aufnahmevorrichtung (2) verbunden. Der Adapter (5) liegt an der horizontalen Kontaktfläche (6a) der ersten Schnittstelle (6) sowie an den vertikalen Kontaktflächen (8a) der zweiten Schnittstelle (8) an.

Die Schraubverbindung zwischen dem Antriebsgehäuse (4) und dem Adpater (5) kann entweder zwei kurze Schrauben (7a) umfassen, die in ein Innengewinde in den Adapter (5) eingreifen. Alternativ kann die Schraubverbindung eine lange Schraube (7b) mit einer Mutter (7c) aufweisen, wobei die Schraube (7b) die Durchgänge (2a) in dem äußeren Schenkel (2b) und die Durchgänge (5a) in dem Adapter (5) durchsetzt und durch die Mutter (7c) gesichert wird.

| Nr. | **Bezeichnung** |
|---|---|
| 1. | Fahrradrahmen |
| 1a. | Unterrohr |
| 1b. | Sattelrohr |
| 1c. | Oberrohr |
| 1d. | Steuerrohr |
| 1e. | Sitzstrebe |
| 1f. | Kettenstrebe |
| 2. | Aufnahmevorrichtung |
| 2a. | Durchgang |
| 3. | Längsrichtung |
| 4. | Antriebsgehäuse |
| 5. | Adapter |
| 5a. | Durchgang |
| 5b. | Adapterteil |
| 5c. | Adapterteil |
| 5d. | Durchgang |
| 6. | Erste Schnittstelle |
| 6a. | Kontaktfläche |
| 6b. | Befestigungsstellen |
| 7. | Schraubverbindung |
| 7a. | Kurze Schrauben |
| 7b. | Schraube |
| 7c. | Mutter |
| 8. | Zweite Schnittstelle |
| 8a. | Kontaktflächen |
| 8b. | Befestigungsstellen |
| 8c. | Durchgang |

## Patentansprüche

1. Fahrradrahmen (1) umfassend
- eine rahmenfest an der Unterseite des Fahrradrahmens (1) angeordnete Aufnahmevorrichtung (2),
- ein lösbar mit der Aufnahmevorrichtung (2) verbundenes Antriebsgehäuse (4) geeignet zur Einhausung eines Getriebes und/oder mindestens einer elektrischen Antriebskomponente,
- eine erste mechanische Schnittstelle (6), die an der Aufnahmevorrichtung (2) angeordnet ist und
- eine zweite mechanische Schnittstelle (8), die an dem Antriebsgehäuse (4) angeordnet ist,
**dadurch gekennzeichnet, dass**
- die erste und zweite mechanische Schnittstelle (6, 8) unterschiedlich sind,
- zur lösbaren Verbindung des Antriebsgehäuses (4) mit der Aufnahmevorrichtung (2) zwischen dem Antriebsgehäuse (4) und der Aufnahmevorrichtung (2) ein zur Anpassung der unterschiedlichen mechanischen Schnittstellen (6, 8) eingerichteter mechanischer Adapter (5) angeordnet ist,
- sowohl die erste als auch die zweite Schnittstelle (6, 8) eine Kontaktfläche (6a, 8a) aufweist,
- die erste Schnittstelle (6) mehrere an der Kontaktfläche (6a) angeordnete Befestigungsstellen (6b) aufweist, wobei an den Befestigungsstellen (6b) erste Befestigungsmittel (7) zur lösbaren Verbindung der Aufnahmevorrichtung (2) mit dem Adapter (5) angeordnet sind,
- und die zweite Schnittstelle (8) mehrere an der Kontaktfläche (8a) angeordnete Befestigungsstellen (8b) aufweist, wobei an den Befestigungsstellen (8b) zweite Befestigungsmittel (7) zur lösbaren Verbindung des Antriebsgehäuses (4) mit dem Adapter (5) angeordnet sind.

2. Fahrradrahmen (1) nach Anspruch 1, **dadurch gekennzeichnet, dass** der Adapter (5) einteilig ist.

3. Fahrradrahmen (1) nach Anspruch 1, **dadurch gekennzeichnet, dass** der Adapter (5) mehrteilig ist.

4. Fahrradrahmen (1) nach einem der Ansprüche 1 bis 3, **dadurch gekennzeichnet, dass** die Oberfläche des Adapters (5) bündig an den Kontaktflächen (6a, 6b) sowohl der ersten als auch der zweiten Schnittstelle (6, 8) zur Anlage bringbar ist.

5. Fahrradrahmen (1) nach einem der Ansprüche 1 bis 4, **dadurch gekennzeichnet, dass** sich die erste und zweite mechanische Schnittstelle (6, 8) hinsichtlich der Formgebung der Kontaktflächen (6a, 8a) und/oder der Lage der Befestigungsstellen (6b, 8b) in Bezug auf die Kontaktflächen (6a, 8a) unterscheiden.

6. Fahrradrahmen (1) nach einem der Ansprüche 1 bis 5, **dadurch gekennzeichnet, dass** die ersten und zweiten Befestigungsmittel (7) als erste und zweite Schraubverbindungen (7) ausgebildet sind.

7. Fahrradrahmen nach Anspruch 6, **dadurch gekennzeichnet, dass** die Schraubenachsen der ersten Schraubverbindungen (7) senkrecht zu den Schraubenachsen der zweiten Schraubverbindungen (7) verlaufen.

8. Fahrradrahmen nach Anspruch 6, **dadurch gekennzeichnet, dass** die Schraubenachsen der ersten Schraubverbindungen (7) parallel zu den Schraubenachsen der zweiten Schraubverbindungen (7) verlaufen.

9. Fahrradrahmen (1) nach einem der Ansprüche 6 bis 8, **dadurch gekennzeichnet, dass** jede erste Schraubverbindung (7) eine Schraube (7a) umfasst, die in ein Loch mit Innengewinde in dem Adapter (5) oder der Aufnahmevorrichtung (2) einschraubbar ist.

10. Fahrradrahmen (1) nach einem der Ansprüche 6 bis 8, **dadurch gekennzeichnet**, jede erste Schraubverbindung (7) eine Schraube (7b) umfasst, die in eine an dem Adapter (5) oder der Aufnahmevorrichtung anliegende Mutter (7c) einschraubbar ist.

11. Fahrradrahmen (1) nach einem der Ansprüche 6 bis 10, **dadurch gekennzeichnet, dass** jede zweite Schraubverbindung (7) eine Schraube (7a) umfasst, die in ein Loch mit Innengewinde in dem Adapter (5) oder dem Antriebsgehäuse (4) einschraubbar ist.

12. Fahrradrahmen (1) nach einem der Ansprüche 6 bis 11, **dadurch gekennzeichnet**, jede zweite Schraubverbindung (7) eine Schraube (7b) umfasst, die in eine an dem Adapter (5) oder dem Antriebsgehäuse (4) anliegende Mutter (7c) einschraubbar ist.

13. Fahrradrahmen (1) nach einem der Ansprüche 1 bis 12, **dadurch gekennzeichnet, dass** die Aufnahmevorrichtung (2) einen sich in Längsrichtung (3) des Rahmens (1) erstreckenden Profilköper mit vieleckigem Querschnitt aufweist.

14. Fahrradrahmen (1) nach Anspruch 13, **dadurch gekennzeichnet, dass** der Profilkörper nach oben gewölbt ist.

## Claims

1. A bicycle frame (1) comprising
- a receiving device (2) arranged securely attached to the frame on the underside of the bicycle frame (1),
- a drive housing (4), removably connected to the receiving device (2) and suitable for accommodating a transmission and/or at least one electrical drive component,
- a first mechanical interface (6), which is arranged on the receiving device (2) and
- a second mechanical interface (8), which is arranged on the drive housing (4) **characterized in that**
- the first and second mechanical interfaces (6, 8) are different,
- in order to removably connect the drive housing (4) to the receiving device (2), a mechanical adapter (5), suitable for fitting the different mechanical interfaces (6, 8), is arranged between the drive housing (4) and the receiving device (2),
- both the first and also the second interface (6, 8) comprise a contact surface (6a, 8a),
- the first interface (6) has a plurality of fastening points (6b) arranged on the contact surface (6a), wherein first fastening means (7) for detachable connection of the receiving device (2) to the adapter (5) are arranged at the fastening points (6b),
- and the second interface (8) has a plurality of fastening points (8b) arranged on the contact surface (8a), wherein second fastening means (7) for detachable connection of the drive housing (4) to the adapter (5) are arranged at the fastening points (8b).

2. The bicycle frame (1) according to claim 1, **characterized in that** the adapter (5) is one-part.

3. The bicycle frame (1) according to claim 1, **characterized in that** the adapter (5) is multipart.

4. The bicycle frame (1) according to one of claims 1 to 3, **characterized in that** the surface of the adapter (5) can be brought to abut flush against the contact surfaces (6a, 6b) both of the first and of the second interface (6, 8).

5. The bicycle frame (1) according to one of claims 1 to 4, **characterized in that** the first and second mechanical interface (6, 8) differ with regard to the shaping of the contact surfaces (6a, 8a) and/or the position of the fastening points (6b, 8b) in relation to the contact surfaces (6a, 8a).

6. The bicycle frame (1) according to one of claims 1 to 5, **characterized in that** the first and second fastening means (7) are configured as first and second screw connections (7).

7. The bicycle frame according to claim 6, **characterized in that** the screw axes of the first screw connections (7) run perpendicularly to the screw axes of the second screw connections (7).

8. The bicycle frame according to claim 6, **characterized in that** the screw axes of the first screw connections (7) run parallel to the screw axes of the second screw connections (7).

9. The bicycle frame (1) according to one of claims 6 to 8, **characterized in that** each first screw connection (7) comprises a screw (7a) which can be screwed into a hole having an internal thread in the adapter (5) or the receiving device (2).

10. The bicycle frame (1) according to one of claims 6 to 8, **characterized in that** each first screw connection (7) comprises a screw (7b) which can be screwed into a nut (7c) which abuts against the adapter (5) or the receiving device.

11. The bicycle frame (1) according to one of claims 6 to 10, **characterized in that** every second screw connection (7) comprises a screw (7a) which can be screwed into a hole having an internal thread in the adapter (5) or the drive housing (4).

12. The bicycle frame (1) according to one of claims 6 to 11, **characterized in that** every second screw connection (7) comprises a screw (7b) which can be screwed into a nut (7c) which abuts against the adapter (5) or the drive housing (4).

13. The bicycle frame (1) according to one of claims 1 to 12, **characterized in that** the receiving device (2) has a profile body with a polygonal cross-section extending in the longitudinal direction (3) of the frame (1).

14. The bicycle frame (1) according to claim 13, **characterized in that** the profile body is curved upwards.

## Revendications

1. Cadre de bicyclette (1) comprenant
- un dispositif de logement (2), fixe sur le cadre, placé sur la face inférieure du cadre de bicyclette (1),
- un carter d'entraînement (4) relié de manière amovible avec le dispositif de logement (2), destiné à capoter une transmission et/ou au moins une composante d'entraînement électrique,
- une première interface mécanique (6), qui est placée sur le dispositif de logement (2) et
- une deuxième interface mécanique (8), qui est placée sur le carter d'entraînement (4),
**caractérisé en ce que**
- les première et deuxième interfaces mécanique (6, 8) sont différentes,
- pour la liaison amovible du carter d'entraînement (4) avec le dispositif de logement (2), un adaptateur mécanique (5) aménagé pour adapter les différentes interfaces mécaniques (6, 8) est placé entre le carter d'entraînement (4) et le dispositif de logement (2),
- aussi bien la première que la deuxième interfaces (6, 8) comportent une surface de contact (6a, 8a),
- la première interface (6) comporte plusieurs zones de fixation (6b) placées sur la surface de contact (6a), sur les zones de fixation (6b) étant placés des premiers moyens de fixation (7), destinés à la liaison amovible du dispositif de logement (2) avec l'adaptateur (5),
- et la deuxième interface (8) comporte plusieurs zones de fixation (8b) placées sur la surface de contact (8a), sur les zones de fixation (8b) étant placés des deuxièmes moyens de fixation (7), destinés à la liaison amovible du carter d'entraînement (4) avec l'adaptateur (5).

2. Cadre de bicyclette (1) selon la revendication 1, **caractérisé en ce que** l'adaptateur (5) est en monobloc.

3. Cadre de bicyclette (1) selon la revendication 1, **caractérisé en ce que** der l'adaptateur (5) est en plusieurs éléments.

4. Cadre de bicyclette (1) selon l'une quelconque des revendications 1 à 3, **caractérisé en ce que** la surface de l'adaptateur (5) est susceptible d'être amenée en appui affleurant sur les surfaces de contact (6a, 6b), aussi bien de la première que de la deuxième interfaces (6, 8).

5. Cadre de bicyclette (1) selon l'une quelconque des revendications 1 à 4, **caractérisé en ce que** les première et deuxième interfaces mécaniques (6, 8) diffèrent au niveau de la conformation des surfaces de contact (6a, 8a) et/ou de la position des zones de fixation (6b, 8b) en rapport aux surfaces de contact (6a, 8a).

6. Cadre de bicyclette (1) selon l'une quelconque des revendications 1 à 5, **caractérisé en ce que** les premier et deuxième moyens de fixation (7) sont conçus sous la forme de premier et deuxième raccords vissés (7).

7. Cadre de bicyclette selon la revendication 6, **caractérisé en ce que** les axes de vis des premiers raccords vissés (7) s'écoulent à la perpendiculaire des axes de vis des deuxièmes raccords vissés (7).

8. Cadre de bicyclette selon la revendication 6, **caractérisé en ce que** les axes de vis des premiers raccords vissés (7) s'écoulent à la parallèle des axes de vis des deuxièmes raccords vissés (7).

9. Cadre de bicyclette (1) selon l'une quelconque des revendications 6 à 8, **caractérisé en ce que** chaque premier raccord vissé (7) comprend une vis (7a) qui est susceptible d'être vissée dans un trou pourvu d'un taraudage dans l'adaptateur (5) ou le dispositif de logement (2).

10. Cadre de bicyclette (1) selon l'une quelconque des revendications 6 à 8, **caractérisé en ce que** chaque premier raccord vissé (7) comprend une vis (7b) qui est susceptible d'être vissée dans un écrou (7c) adjacent à l'adaptateur (5) ou au dispositif de logement.

11. Cadre de bicyclette (1) selon l'une quelconque des revendications 6 à 10, **caractérisé en ce que** chaque deuxième raccord vissé (7) comprend une vis (7a) qui est susceptible d'être vissée dans un trou pourvu d'un taraudage dans l'adaptateur (5) ou le carter d'entraînement (4).

12. Cadre de bicyclette (1) selon l'une quelconque des revendications 6 à 11, **caractérisé en ce que** chaque deuxième raccord vissé (7) comprend une vis (7b) qui est susceptible d'être vissée dans un écrou (7c) adjacent à l'adaptateur (5) ou au carter d'entraînement (4).

13. Cadre de bicyclette (1) selon l'une quelconque des revendications 1 à 12, **caractérisé en ce que** le dispositif de logement (2) comprend un corps profilé pourvu d'une section transversale polygonale, qui s'étend dans la direction longitudinale (3) du cadre (1).

14. Cadre de bicyclette (1) selon la revendication 13, **caractérisé en ce que** le corps profilé est bombé vers le haut.
